# EUROPEAN PATENT SPECIFICATION

(11) **EP 1 739 675 B1**
(45) Date of publication and mention of the grant of the patent: **06.04.2011**
(21) Application number: 06300546.6
(22) Date of filing: 01.06.2006
(51) Int. Cl.: G11B 20/10, H04N 7/52

(54) **Method and apparatus for managing memory accesses in an AV decoder**
Verfahren und Vorrichtung zur Verwaltung von Speicherzugriffen bei einem AV-Dekoder
Procédé et appareil de gestion des accès à la mémoire dans un décodeur AV

(30) Priority: 01.07.2005 EP 05106000
(43) Date of publication of application: 03.01.2007
(73) Proprietor: Thomson Licensing, 92130 Issy-les-Moulineaux (FR)
(72) Inventor: Winter, Marco, 30659 Hannover (DE)
(74) Representative: Thies, Stephan

(56) References cited:
- EP-A- 0 710 029
- PATENT ABSTRACTS OF JAPAN vol. 1998, no. 01, 30 January 1998 (1998-01-30) & JP 09 246986 A (MATSUSHITA ELECTRIC IND CO LTD), 19 September 1997 (1997-09-19)

## Description

The invention relates to a method and an apparatus for managing memory accesses for an AV decoder, in particular for managing the demultiplexing and data handling involved in decoding and playing back multi-component AV bitstreams.

### Background

AV data are binary data read out from storage media like CD-ROM, VCD, S-VCD, DVD or BD or received through a transmission channel, which contain segments destined for a set of one or more component decoders, like Audio, Video, or Sub-picture. In an AV playback device, data are arriving from the source (storage media or transmission channel) at a first data rate which may be time-varying, near-constant or constant-in-sections; they are typically fed to a buffer memory in order to compensate for the different instantaneous or short-term data rates of the data source and the data destination (the component decoders).

In case of optical media readout, the buffer memory is sometimes called track buffer or mechanical buffer; here it also serves to bridge those time intervals when the incoming data stream is interrupted. Such interruption happens whenever the optical pickup is being sent to a different location on the media to jump to a different target address. It also happens, in the form of being sent back a few tracks, as part of buffer control in cases of low data consumption, e.g. when decoding low-activity passages of video and/or audio signal.

Conventionally, data are organised in sectors of often constant length, and sectors contain pieces of payload. Very commonly, the payload of each sector is implicitly guaranteed to be destined to one component decoder only.

In many known AV decoders, data segments are re-copied from the track buffer into individual decoder bit buffers associated with the component decoders. Conceptually, the task of delivering each data segment to the component detector it is destined for is a demultiplexing task. In state of the art devices, sectors are read into memory and then the decoder payload of the sectors is copied to the appropriate decoder bit buffers. From each of the decoder bit buffers, the associated decoder receives its input, and will often copy the data in turn to an internal working memory used during the decoding proper.

EP 0917147 A describes a method and apparatus for improved controlling of a track buffer, where an input data stream is written to a data buffer and is controlled in such a way that at least one output data stream derived from the input data stream is forwarded to an associated data decoder by means of a chained list generated by a software demultiplexer. The track buffer TB and the decoder bit buffers are mapped into the same physical memory, and the component decoders directly process the data that were initially written to the track buffer, using a chained list technique. In this way re-copying data from the track buffer TB into the decoder bit buffers can be avoided.

EP 0710029 A discloses an apparatus for receiving and decoding a multiplexed data stream connected to a memory device addressable in an address space and having two decoders, where the data stream is organised in sectors containing payload portions individually destined for one of the decoders, the apparatus being equipped to write each sector of the data stream into the memory device at most once. However, EP 0710029 A derives address data in selected ones of several predefined ways using series of dividers on clocks. For a given type of image like SD or HD, address space of the memory has a predefined configuration.

### Invention

The known method and apparatus can be seen to have the disadvantage that although they avoid copy operations from track buffer to decoder bit buffers, still a copy operation has to be performed when data are accepted from a decoder bit buffer into a decoder internal working memory which prior art component decoders require. Decoder internal working memory is necessary because efficient compression algorithms employ reference data that are derived from previously processed data, like pieces of previously decoded signal or of a predicted signal derived therefrom. Such reference data are typically held in the decoder internal memory, and prior art component decoders expect this memory at addresses which either are fixed or can only be changed occasionally as part of a decoder setup procedure.

First reading data into memory and lateron copying the same data into dedicated decoder memory areas summarises into a big required memory access bandwidth and hence instrument hardware cost. A problem to be solved by the invention hence is to improve the memory management to that respect. The invention achieves this by making it possible to avoid altogether any data copying or data moving inside the memory, after data have once been written into it.

An apparatus according to the invention is connected to a memory device that covers or is addressable in an address space. The apparatus has two or more decoders and receives and decodes a data stream organised in sectors which contain payload portions individually destined for one of the decoders. At least one of the decoders generates decoder read and/or write addresses from within a predetermined subset of the address space, and in that way requests data to be written to or read from memory. According to the invention, the apparatus writes each sector of the data stream into the memory device at most once, it has an address translator which translates the decoder addresses into translated addresses which are not confined to be from within the predetermined subset. The apparatus uses the translated addresses for accessing the memory device. The advantage is that in exchange for a moderate additional hardware, namely the address translator, repeated writing and re-writing of identical data is avoided, hence memory bandwidth requirement is drastically reduced.

Advantageously, the address translator of the apparatus receives, for sectors as they are being received one after the other, a particular destination information describing the destination of the payload portions of the sectors and particular memory addresses under which the received sectors have been stored in the memory; it further receives a second kind of memory addresses, namely addresses of those data that selected ones of the decoders request to access; it translates the memory addresses of the second kind into a third kind of memory addresses using the destination informations and the first memory addresses of the sectors received so far; and it provides this third kind of memory addresses so that the requesting decoder can access the requested data in the memory. It is of advantage that the described mechanism is actually not limited to decoders requesting to read data from memory; it can also be used to realise requests where decoders want to write or modify the memory data at certain locations. Such modifications occur, for example, during video dcoding, when a reconstructed picture is being calculated as the additive superposition of a predicted picture and a decoded prediction error.

Advantageously, the address translator of the apparatus comprises a set of address translation units, each associated to one of the decoders. Each address translation unit receives, as memory addresses of a first kind, addresses of those received sectors that are destined for the decoder associated to the address translation unit, and it receives, as memory addresses of a second kind, addresses that the associated decoder requests to access. With these data, the address translation unit translates the memory addresses of the second kind into memory addresses of a third kind, namely addresses under which the associated decoder can really access the data it requests. This structure has the advantage of being regular, hence it can easily be designed and scaled to different decoder configurations.

Advantageously, also, each of the described address translation units comprises a set of address translation stages each having an input and an output respectively connected in parallel. Each of the address translation stages, in turn, comprises local memory means for an address range and for an address offset, an address comparator which checks whether or not an input address present at the input is within the address range, an adder to add the address offset to the input address, and a gate that passes the addition result to the output of the address translation stage if the check is true. This structure has the advantage that it consists of mostly simple gate logic that is apt to be implemented in a way not causing additional clock delays.

Memory accesses are managed in such an apparatus, according to the invention, in that the data of received sectors are stored into memory under a first memory address; the first memory address and the destination information of the received sector is provided to address translation means; when one of the decoders requests data from a second memory address, the second memory address is forwarded to the address translation means; in the address translating means, the second memory address is translated into a third memory address; the requested data is retrieved from the memory using the third memory address and is transferred to the decoder. This method advantageously allows to continue using conventional decoder designs which expect their working memory at a fixed subset of the overall address space, while the true memory accesses take place in an arbitrary, scattered subset of the overall address space, flexibly adapting itself to any order or arrangement in which incoming sectors may have been written to memory.

Advantageously, when the address translation means comprises a set of address translation units each associated to one of the decoders, in the step of providing, the first memory address is provided to the address translation unit associated with the decoder of the received sector; in the step of forwarding, the second memory address is forwarded to the address translation unit associated with the decoder which requested the data, and the step of translating is performed in the address translation unit associated with the decoder which requested the data. This has the advantage of breaking up the overall computations into a set of basic and simple data manipulations.

Also, it is of advantage, if for translating, the second memory address is compared to a set of address ranges, and the third memory address is calculated from the second memory address using an address offset associated with that address range in which the second memory address is.

In this case, when one of the decoders requests data from a linear sequence of second memory addresses starting with a start memory address and ending with an end memory address, the step of translating advantageously comprises substeps of comparing the start memory address to the set of address ranges; of calculating a translated start memory address from the start memory address using the address offset associated with that address range in which the start memory address is; of calculating, if the end memory address also is in the address range, a translated end memory address from the end memory address using the address offset, and retrieving the requested data from the memory means using the translated start memory address and the translated end memory address; and of retrieving, if the end memory address is outside the address range, a part of the requested data from the memory means using the translated start memory address and the address range and repeating the substeps with a modified start memory address.

With other words, in the present invention a dedicated memory management is proposed, which while avoiding data copying within RAM altogether, nevertheless provides to the decoders a linear address space to work upon. Realisations of the proposed memory management are described, which constitute small separate pieces of address conversion logic, which easily fit in between conventional approaches for data read-in and for decoder IC cores.

### Drawings

Exemplary embodiments of the invention are illustrated in the drawings and are explained in more detail in the following description. The explanations use an example where the data destinations are individual component decoders of an AV decoder or player. However, it is obvious to the expert in the field, that the principles of the invention can also be used in systems where the data destinations are any other data consuming or data accessing units or sub-units. In this sense, the term "decoders" in the following shall be understood to encompass "data sink", "data destination" or "data accessor" in general.

In the figures:
- Fig. 1: shows an example of an arrangement of sectors in a buffer;
- Fig. 2: shows a first example of a data arrangement;
- Fig. 3: shows a second example of a data arrangement;
- Fig. 4: shows a block diagram of a first implementation of the invention;
- Fig. 5: shows a block diagram of a second implementation of the invention;
- Fig. 6: shows in block diagram form parts of a third implementation of the invention, with a memory controller and address translation units;
- Fig. 7: shows in block diagram form the internal structure of an address translation unit of the invention;
- Fig. 8: shows in block diagram form the internal structure of an address translation stage of the invention.

### Exemplary embodiments

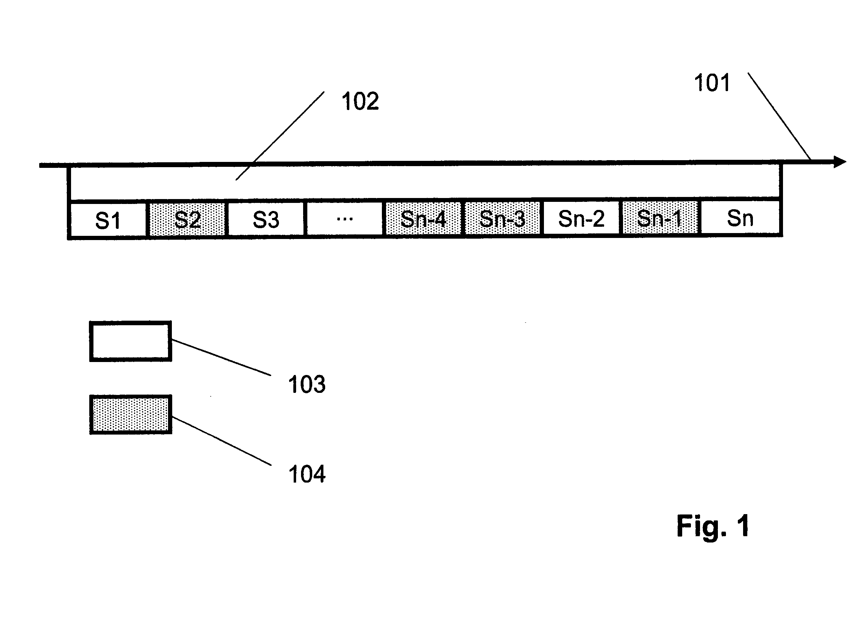

Figure 1 shows an example of an arrangement of sectors S1-Sn within a sector buffer 102 covering a subset of an address domain 101. The sectors S1-Sn are indicated as being either free sectors 103 or used sectors 104. As shown in the example of Fig. 1, the used sectors may be arbitrarily distributed within the sector buffer. The address domain 101 in this case is a file manager address domain.

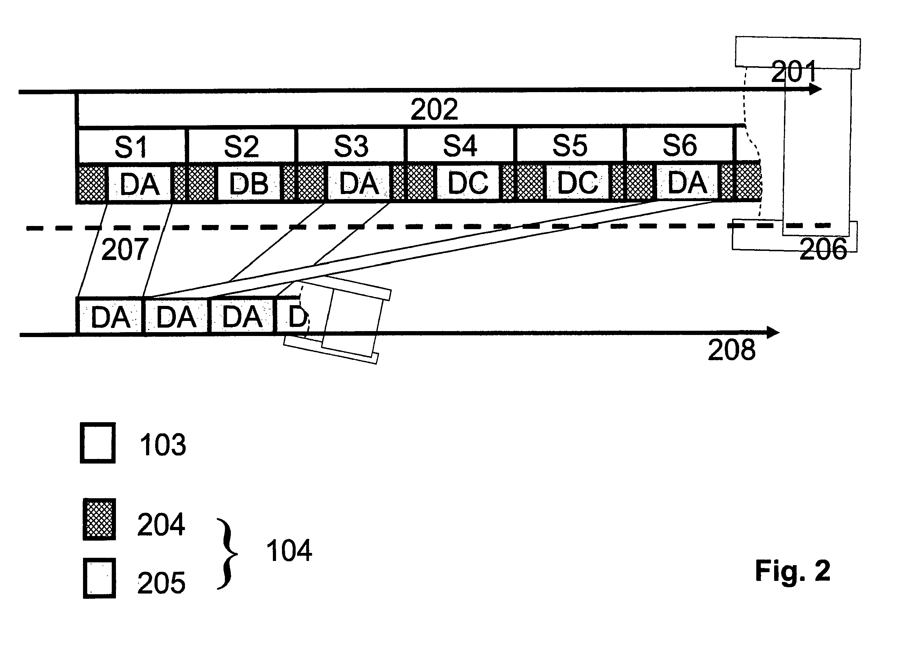

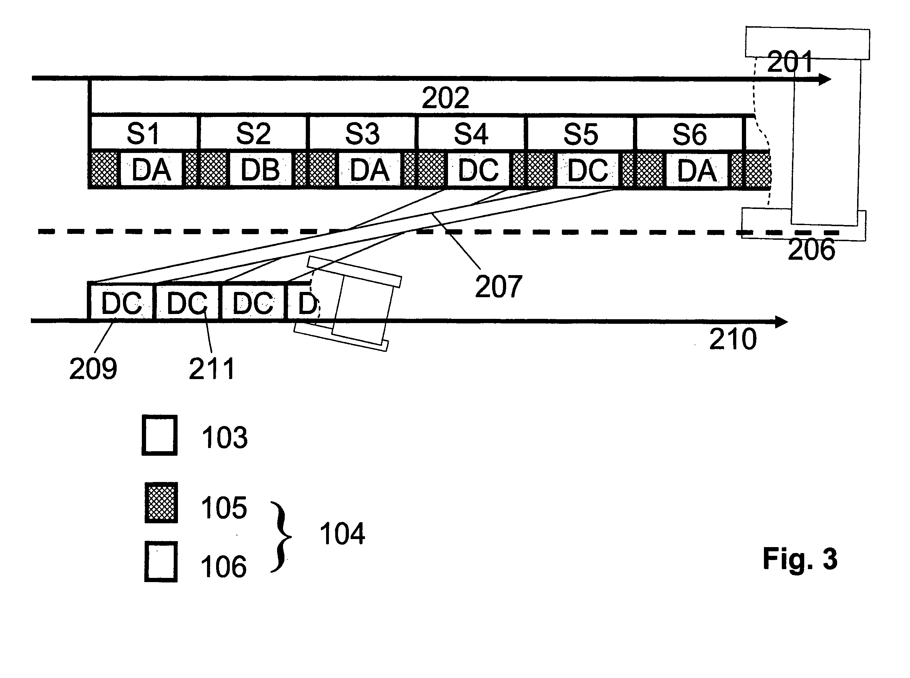

Figures 2 and 3 show examples of data arrangements, where for compactness of illustration it is assumed that the part of the sector buffer shown contains all used sectors 104, i.e. has no free sectors 103. The Figures aim to illustrate that, generally, even within the used sectors 104, only part 106, 205, 209 of the sectors S1-S6 constitutes decoder payload. The remaining sector content 204, which typically is control information but may comprise other data as well, is not destined for the decoder. Given this arrangement of relevant and irrelevant data, a memory management unit or MMU must provide access only to the decoder payload part of the sectors. Hence the MMU can be seen to provide the data of a decoder address domain 208 to the decoders, and Figures 2 and 3 in comparison illustrate how, from one file manager address domain 201, data of two different decoder address domains 208, 210 can alternatively be derived. The transition from the file manager address domain 201 to the decoder address domains 208, 210 can be visualised as crossing a logical address domain boundary 206.

It must be noted that the sequence of sectors S1-S6 shown in Figs. 2 and 3 does conceptually not correspond to a data stream or part thereof. In state of the art writing an incoming data stream to the data buffer, sectors are used and re-used in random order, just as they are being signalled as being free or free again to receive data. Of course, after reset or switch on, the entire data buffer is free. In this case, it may happen more or less by chance that temporally consecutive incoming sectors get stored in physically consecutive memory locations. Whereas the data stream designates a sequence of sectors in readout or reception order, the sequence of syectors shown in Figs. 2 and 3 shows them in address order, i.e. the Figs symbolically show the memory content.

In Fig. 2, the upper part shows a file manager address domain 201 in which a sector buffer 202 consisting of sectors S1-S6 is located. The sectors S1-S6 are shown to contain overhead data 204 as well as decoder payload data 205 destined for decoders DA, DB and DC. Although not shown, the location and size of the payload data 205 within the sectors S1-S6 may in general vary from sector to sector. The middle and bottom part of Fig. 2 then symbolically show an address domain boundary 206 across which the decoder payload 205 destined for decoder DA is being re-purposed 207 into a decoder DA address domain 208. The example additionally illustrates that not only the absolute position, but even the order of sector payload in the decoder address domain 208 may partly be different from the order of the enclosing sectors S1-S6 within the file manager address domain 201. Of course, such an irregular or inverted payload ordering must somehow be indicated. It may be indicated explicitly by information within the decoder payload or within the overhead data; or be implicitly derivable from rules governing the data stream or the way it is stored into memory.

Fig. 3 is based on the same sequence of sectors S1-S6 to start with, and then shows re-purposing 207 of decoder DC payload 209 into a decoder DC address domain 210. Again, the order of payload is inverted between the two address domains 201, 210. In the decoder address domain 210, there even is one piece of decoder DC payload 211 that still needs to be retrieved from or associated to a sector payload in the file manager address domain. It is up to the application format in question to define maximum delay times allowable until such belated payload must be available.

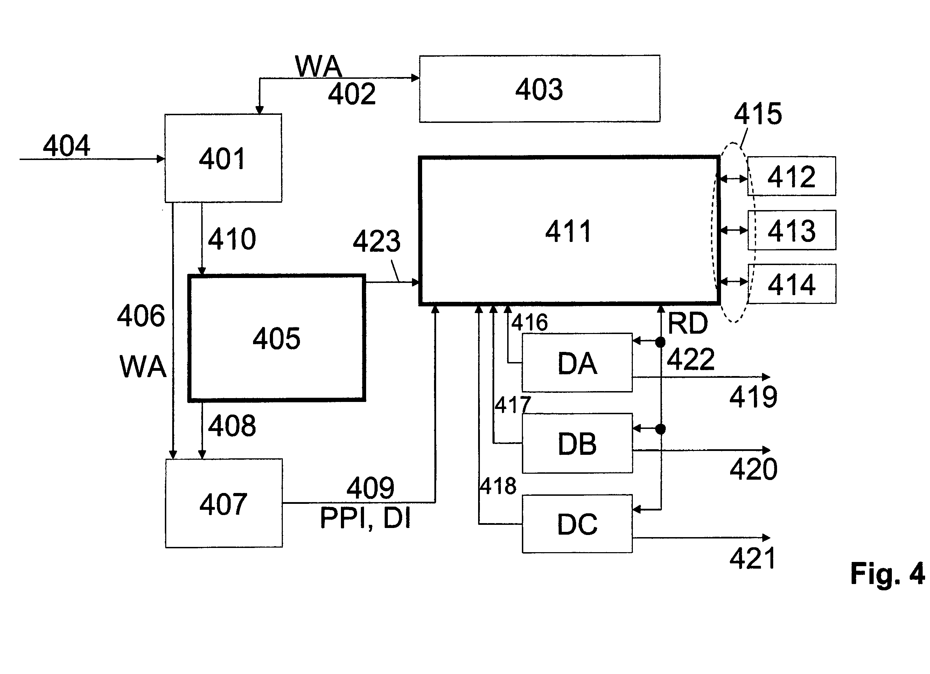

Fig. 4 shows a first implementation of the invention, which has a file manager 401 connected 402 to a sector buffer space map 403. The file manager 401 has an input to receive a sector stream 404, and it has a data output 410 connected to a sector buffer 405 and a control output 406 connected to a demultiplexer 407. The demultiplexer 407 has a read access 408 to the sector buffer 405 and a control output 409 connected to a memory controller 411. The memory controller 411 has a data access 423 to the sector buffer 405, and an output 422 that is connected to inputs of two or more decoders DA, DB, DC, for each of which the memory controller 411 maintains 415 a payload map 412, 413, 414. Each of the decoders DA, DB, DC has a control output 416, 417, 418 for requesting data accesses; the control outputs 416, 417, 418 are connected to the memory controller 411. Each of the decoders has another output 419, 420, 421 for the decoded data.

Whenever the file manager 401 receives an incoming sector of the sector stream 404, it retrieves 402 from the sector buffer space map 403 an address WA indicating a free space or a no longer used space in the sector buffer 405 that is ready to receive new data. The file manager 401 then writes 410 the sector into the sector buffer 405 at addresses starting from the address WA, marks the address WA in the sector buffer space map 403 as no longer free, and indicates 406 to the demultiplexer 407 the availability of a new sector as well as the address WA used for storing it. The demultiplexer 407, using the address WA, inspects the new sector in the sector buffer 405, and extracts or otherwise generates a payload position information PPI and a destination information DI both of which it forwards 409 to the memory controller 411. The memory controller 411, using the destination information DI, forwards 415 the payload position information PPI to that one among the payload maps 412, 413, 414 that is associated with the destination of the payload.

From then on, whenever a decoder DA, DB, DC sends 416, 417, 418 a data request to the memory controller 411, the memory controller 411, using the payload map 412, 413, 414 associated to the requesting decoder DA, DB, DC, delivers 422 requested data RD to the requesting decoder DA, DB, DC or allows the requesting decoder DA, DB, DC a write access to the requested data RD.

It has been described above, how incoming sectors are written into the sector buffer at a free sector address WA which thereupon is marked as no longer free. Correspondingly, as soon as a sector is known to be no longer needed by any of the decoders, its address WA is marked in the sector buffer space map 403 as free. This fast and simple operation is enough to guarantee that the memory at address WA will sooner or later be used again, i.e. overwritten, to receive a new incoming sector.

In the context of AV data decoding, depending on the data being presented, on user's choice and on apparatus settings, payload data destined for certain ones of the decoders DA, DB, DC may be known beforehand to be not needed during an ongoing playback. The most typical example of this are the unselected audio channels in a multi audio context. If that is the case, it will typically be the demultiplexer 407 which will recognise the pertaining sectors and exclude them from any further processing. Alternatively, in order to avoid the sector buffer being filled with garbage as much and as early as possible, one may as well implement this capability into the file manager 401, which in that case needs an at least basic demultiplexing capability of its own. Therefore any processing steps given in this description are to be understood to involve many, but not necessarily all sectors or parts of payload within a data stream.

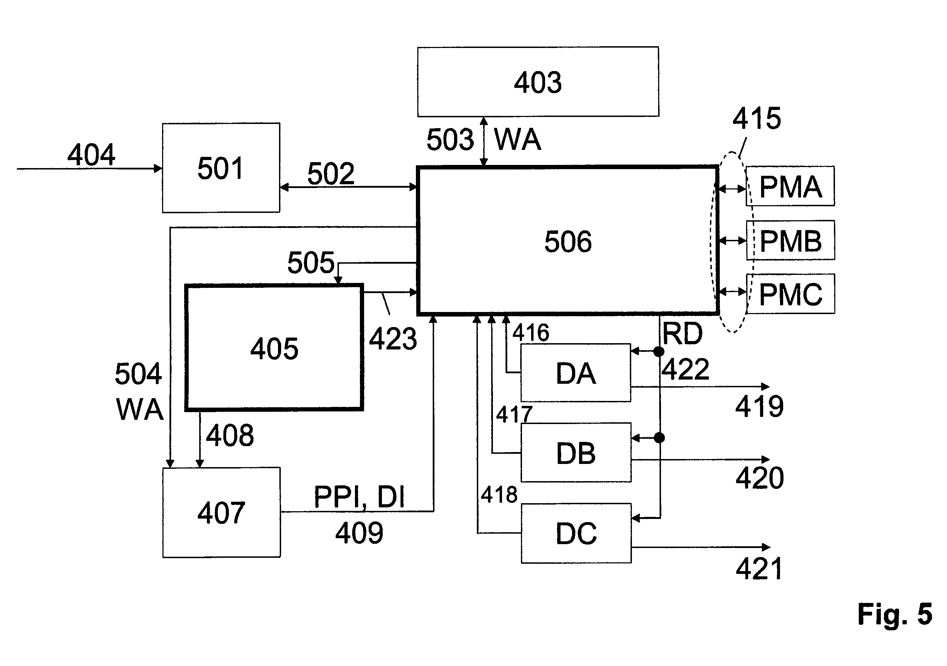

Fig. 5 shows a second implementation of the invention, with identical numerals indicating elements identical to those of Fig. 4. In this case, it is not the file manager 501 which handles the storing and freeing of new sectors in the sector buffer. Rather, an extended memory controller here called memory management unit or MMU 506 performs this task. This approach reduces the processing power requirements for the file manager 501, at the expense of the MMU 506 being more complex than the memory controller 411.

The implementation has a file manager 501 which is connected 502 to a memory management unit 506 and has an input to receive a sector stream 404. The memory management unit 506 is connected 503 to the sector buffer space map 403, it has a data output 505 connected to the sector buffer 405 and it has a control output 504 connected to the demultiplexer 407. The control output 409 of the demultiplexer 407 is connected to the memory management unit 506.

In this case, whenever the file manager 501 receives an incoming sector of the sector stream 404, it forwards 502 it to the memory management unit 506. The memory management unit 506 then retrieves 503 from the sector buffer space map 403 the address WA, writes 505 the sector into the sector buffer 405 at address WA, and indicates 504 to the demultiplexer 407 the availability of a new sector as well as the address WA used for storing it. The demultiplexer 407 forwards 409 the payload position information PPI and the destination information DI to the memory management unit 506. The memory management unit 506, using the destination information DI, forwards 415 the payload position information PPI to that one among the payload maps 412, 413, 414 that is associated to the destination of the payload. The remaining elements or processing steps are identical to those described for Fig. 4.

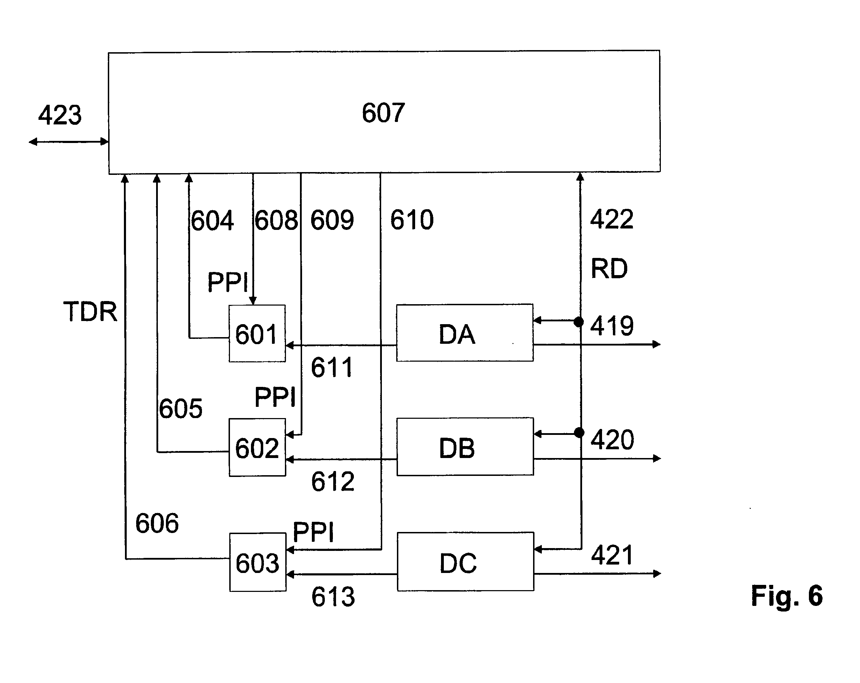

Figure 6 shows parts of a third implementation of the invention, containing address translation units 601, 602, 603 that are an alternative to the payload maps 412, 413, 414 of Figs. 4 and 5. Here, a memory controller 607 has data access 423 to a sector buffer (not shown) and has an output 422 that is connected to inputs of two or more decoders DA, DB, DC, as before. As before, each of the decoders DA, DB, DC has a control output 611, 612, 613 for requesting data accesses; but here these control outputs are individually connected to the address translation units 601, 602, 603 associated to the decoders DA, DB, DC. Each of the address translation units 601, 602, 603 has a control input 608, 609, 610 for receiving payload position information PPI from the memory controller 607. It also has a control output 604, 605, 606 for sending translated data requests TDR to the memory controller 607.

Whenever an incoming sector has been received and written into the sector buffer, the memory controller 607, using a destination information DI, forwards 608, 609, 610 the payload position information PPI to that one among the address translation units 601, 602, 603 that is associated with the destination of the payload. Of course, alternatively to each of the address translation units 601, 602, 603 being individually connected to the memory controller 607, a bus-like connection can also be used. In that case, the memory controller 607 must put onto the bus not only the payload position information PPI, but also the destination information DI or an equivalent identifier of some kind, allowing the relevant address translation unit 601, 602, 603 to react and to retrieve the PPI from the bus. The decoders DA, DB, DC send 611, 612, 613 all data requests to their associated address translation units 601, 602, 603, which translate the requested data address and send the resulting translated data requests TDR to the memory controller 607. The memory controller 607, using the translated data requests TDR, read accesses 423 the sector buffer (not shown) and delivers 422 requested data RD to the requesting decoder DA, DB, DC. Correspondingly, for servicing a write access request, the memory controller 607 receives 422 requested data RD from the requesting decoder DA, DB, DC, and, using the translated data requests TDR, stores 423 the data to the sector buffer (not shown).

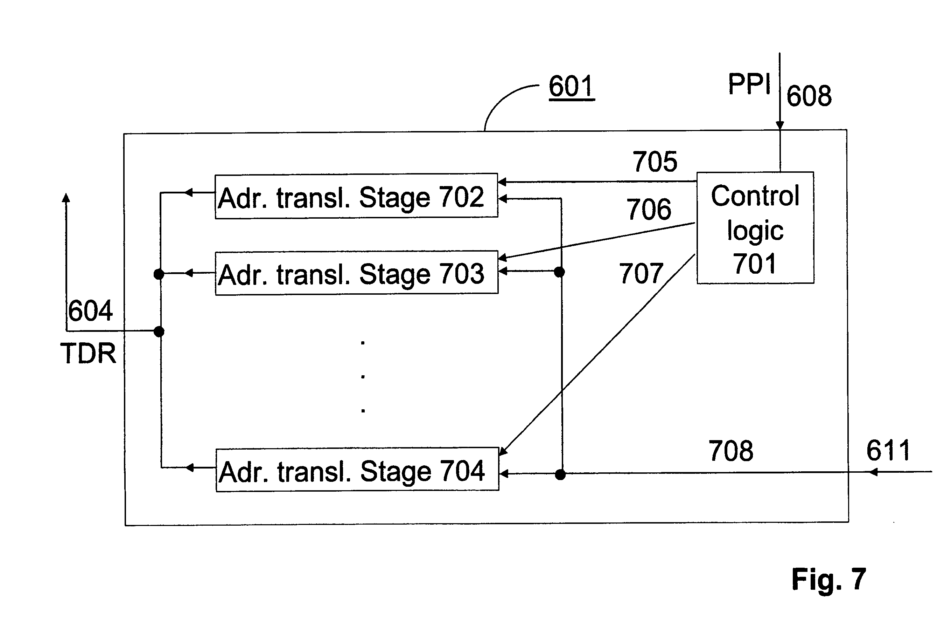

Fig. 7 shows in block diagram form the internal structure of the address translation unit 601 assumed to be associated to decoder DA; the same structure applies for all address translation units and their respectively associated decoders. The address translation unit 601 has a set of one or more address translation stages 702, 703, 704, and a control logic 701. Each of the address translation stages 702, 703, 704 can locally store a payload position information PPI, which it uses to realise one linear subset of the address mapping required for the payload of decoder DA. Depending on the fragmentation of the data on which the decoder DA currently works, the address mapping valid at any time for decoder DA consists of a varying number of such linear subsets, and hence a varying number of address translation stages are needed to implement these. Therefore, an appropriate number of address translation stages must be instantiated, each of which, at any instance, can be in an active or inactive state. The number of stages depends among others on global system parameters like sector size or maximum allowed memory size.

When an incoming sector destined for decoder DA has been received, the control logic 701 receives the pertaining payload position information PPI through its input 608, forwards 705, 706, 707 it to one of the inactive address translation stages 702, 703, 704, to locally store the payload position information, and sets that address translation stage into the active state.

Data requests received 611 from decoder DA, are internally forwarded 708 in parallel to all address translation stages 702, 703, 704. Depending on in which of the linear subsets the requested data address falls, one of the active ones of the address translation stages 702, 703, 704 will then translate the requested data address and will output 604 the resulting translated data request TDR.

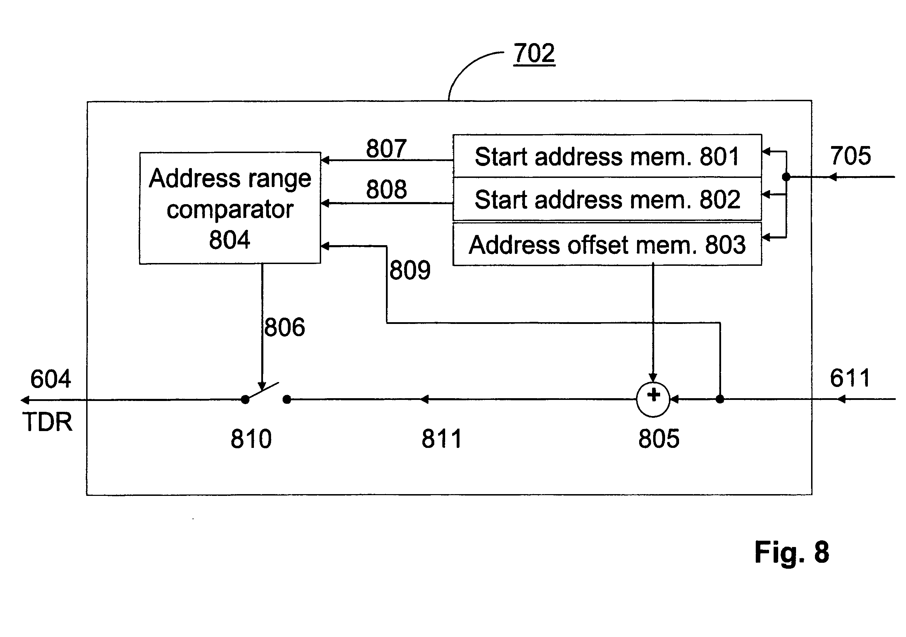

Fig. 8 shows in block diagram form the internal structure of the address translation stage 702; the same structure applies for all address translation stages. The input connection 705 of the address translation stage 702, through which payload position information PPI is received, is connected to a start address memory 801, an end address memory 802, and an address offset memory 803. Whenever a payload position information PPI is received, a start address, an end address, and an address offset are derived therefrom and written into these memories, respectively. The contents of the start address memory 801 and of the end address memory 802 are forwarded 807, 808 to an address range comparator 804, whereas the content of the address offset memory 803 is forwarded to an adder 805. Through a data request input 611, addresses of those data are received, that the associated decoder requests access to. Requested addresses are forwarded 809 to the address range comparator 804, where it is checked whether the requested address is or is not within the address range defined by the start address and the end address. The result of the check is used 806 to control a gate 810. In parallel to being forwarded to the address range comparator 804, each requested address is also forwarded to the adder 805, where the content of the address offset memory 803 is added to it. If the check of the address range comparator 804 is positive, the result of the addition is connected, via the gate 810, to the control output 604 of the address translation stage 702 where it constitutes a translated data request TDR.

With other words, the invention describes apparatus and method for receiving and decoding a multiplexed data stream 404 organised in sectors S1-S6, Sn containing payload portions 205 individually destined for one of two or more decoders DA, DB, DC. The apparatus is connected to a memory device 405 addressable in an address space 101, 201. At least one of the decoders DA, DB, DC generates read and/or write addresses 416-418, 611-613 from within a predetermined address range that is a true subset of the address space 101, 201. For avoiding additional meory accesses caused by moving data already contained in the memory 405 into the decoder address range, the apparatus has an address translator 411, 506, 601, 602, 603 which translates the decoder addresses 416-418, 611-613 into translated addresses TDR, 604, 605, 606 and uses the translated addresses for accessing 423 the memory device 405.

## Claims

1. An apparatus for receiving and decoding a multiplexed data stream (404), the apparatus being connected to a memory device (405) addressable in an address space (101, 201) and having two or more decoders (DA, DB, DC), where the data stream (404) is organised in sectors (S1-S6, Sn) containing payload portions (205) individually destined for one of the decoders (DA, DB, DC), where the apparatus is equipped to write (410, 505) each sector of the data stream into the memory device (405) at most once,
**characterised in that** at least one of the decoders (DA, DB, DC) is equipped to request data to be written to or read from the memory device (405) at decoder addresses (416, 417, 418, 611, 612, 613) from within a predetermined subset of the address space (101, 201), and **in that**
the apparatus has an address translator (411, 506, 601, 602, 603) which translates the decoder addresses (416, 417, 418, 611, 612, 613) into translated addresses (TDR, 604, 605, 606) that are not confined to the predetermined subset, and uses the translated addresses (TDR, 604, 605, 606) for accessing (423) the memory device (905).

2. The apparatus of claim 1, where the destination of the payload portions is described by a destination information (DI), the apparatus additionally **characterised in that** the address translator (411, 506, 601, 602, 603) is equipped and arranged
- to receive, for multiple received sectors, their particular destination information (DT) and first memory addresses (PPI, 409) under which they have been stored in the memory device (405);
- to receive second memory addresses (416-418, 611-613) of data that selected ones of the decoders (DA, DB, DC) request;
- to translate the second memory addresses (416-418, 611-613) into third memory addresses (TDR, 604, 605, 606) using the destination informations (DI) and the first memory addresses (PPI, 409) of the received sectors; and
- to provide the third memory addresses (TDR, 604, 605, 606) for retrieving (423) the requested data from the memory (405).

3. The apparatus of claim 2, where the address translator comprises a set of address translation units (601, 602, 603) each associated to one of the decoders (DA, DB, DC), where each address translation unit (601-603) is equipped and arranged to receive (608-610) the first memory address (PPI) of those received sectors that are destined for the associated decoder (DA, DB, DC), and to receive the second memory address (611-613) of those data that are requested by the associated decoder (DA, DB, DC), and is equipped to translate the second memory address (611-613) into the third memory address (TDR, 604-606) for those data that are requested by the associated decoder (DA, DB, DC).

4. The apparatus of claim 3, where the address translation unit (601-603) comprises a set of address translation stages (702-704) each having an input (708) and an output (604), where the inputs and the outputs of the address translation stages (702-704) are each connected in parallel, and where the address translation stage (702-704) comprises local memory means (801-803) for an address range and for an address offset, an address comparator (804) which checks whether or not an input address present at the input (611, 809) is within the address range (807, 808), an adder (805) to add the address offset (803) to the input address (611), and a gate (810) that passes an output of the adder (805) to the output (604) of the address translation stage (702-704) if the check is true (806).

5. A method for managing memory accesses in an apparatus for receiving and decoding data organised in a sequence of sectors (404) that each contain data (205) destined to one of a predefined set of decoders (DA, DB, DC) as described by a destination information (DI) of the sector, the method **characterised by** the steps of:
- storing (410, 505) the data of a received sector into memory means (405) retrievable under a first memory address (PPI),
- providing the first memory address (PPI) and the destination information (DI) of the received sector to address translation means (411, 506),
- forwarding, when one of the decoders (DA, DB, DC) requests to access data in the memory means (405) at a second memory address (416-418) confined to a predetermined subset of the address space (101, 201) of the memory means (405), the second memory address (416-418) to the address translation means (411, 506),
- translating, in the address translating means (411, 506), the second memory address (416-418) into a third memory address (TDR, 604-606) not confined to the predetermined subset,
- retrieving the requested data from the memory means (405) using the third memory address (TDR, 604-606) and transferring the data to the decoder (DA, DB, DC).

6. The method of claim 5, where the address translation means comprises a set of address translation units (601-603) each associated to one of the decoders (DA, DB, DC); where, in the step of providing, the first memory address (PPI) is provided to the address translation unit (601-603) associated with the decoder (DA, DB, DC) of the received sector; where, in the step of forwarding, the second memory address (416-418, 611-613) is forwarded to the address translation unit (601-603) associated with the decoder (DA, DB, DC) which requested the data; and where the step of translating is performed in the address translation unit (601-603) associated with the decoder (DA, DB, DC) which requested the data.

7. The method of claim 5 or 6, where the step of translating comprises substeps of
- comparing (804) the second memory address (611, 809) to a set of address ranges (801, 802, 807, 808) each associated with an address offset (803),
- calculating (805) the third memory address (811) from the second memory address (611) using that address offset (803) which is associated with the address range (801, 802, 807, 808) in which the second memory address (611, 809) is.

8. The method of claim 7, where, when the one of the decoders (DA, DB, DC) requests data from a linear sequence of second memory addresses (416-418, 611-613) starting with a start memory address and ending with an end memory address, the step of translating comprises substeps of
- comparing (804) the start memory address to the set of address ranges;
- calculating (805) a translated start memory address (811) from the start memory address using the address offset (803) associated with that address range (801, 802, 807, 808) in which the start memory address is;
- calculating, if the end memory address also is in the address range, a translated end memory address from the end memory address using the address offset, and retrieving the requested data from the memory means using the translated start memory address and the translated end memory address; retrieving, if the end memory address is outside the address range, a part of the requested data from the memory means using the translated start memory address and the address range and repeating the substeps with a modified start memory address.

## Patentansprüche

1. Vorrichtung zum Empfangen und Decodieren eines gemultiplexten Datenstroms (404), wobei die Vorrichtung mit einer in einem Adressraum (101, 201) adressierbaren Speichervorrichtung (405) verbunden ist und zwei oder mehr Decoder (DA, DB, DC) aufweist, wobei der Datenstrom (404) in Sektoren (S1-S6, Sn) organisiert ist, die einzeln für einen der Decoder (DA, DB, DC) bestimmte Nutzinformationsabschnitte (205) enthalten, wobei die Vorrichtung dafür ausgestattet ist, jeden Sektor des Datenstroms höchstens einmal in die Speichervorrichtung (405) zu schreiben (410, 505),
**dadurch gekennzeichnet, dass** mindestens einer der Decoder (DA, DB, DC) dafür ausgestattet ist, anzufordern, dass Daten unter Decoderadressen (416, 417, 418, 611, 612, 613) aus einer vorgegebenen Teilmenge des Adressraums (101, 201) in die Speichervorrichtung (405) geschrieben oder von ihr gelesen werden sollen, und dadurch, dass
die Vorrichtung einen Adressenumsetzer (411, 506, 601, 602, 603) aufweist, der die Decoderadressen (416, 417, 418, 611, 612, 613) in nicht auf die vorgegebene Teilmenge beschränkte umgesetzte Adressen (TDR, 604, 605, 606) umsetzt und die umgesetzten Adressen (TDR, 604, 605, 606) zum Zugreifen (423) auf die Speichervorrichtung (405) verwendet.

2. Vorrichtung nach Anspruch 1, bei der der Zielort der Nutzinformationsabschnitte durch eine Zielinformation (DI) beschrieben wird, wobei die Vorrichtung zusätzlich **dadurch gekennzeichnet ist, dass** der Adressenumsetzer (411, 506, 601, 602, 603) ausgestattet und beschaffen ist:
- für mehrere empfangene Sektoren die jeweilige Zielinformation (DI) und erste Speicheradressen (PPI, 409) zu empfangen, unter denen die Sektoren in der Speichervorrichtung (405) gespeichert worden sind;
- zweite Speicheradressen (416-418, 611-613) von von ausgewählten Decodern (DA, DB, DC) angeforderten Daten zu empfangen;
- die zweiten Speicheradressen (416-418, 611-613) in dritte Speicheradressen (TDR, 604, 605, 606) unter Verwendung der Zielinformation (DI) und der ersten Speicheradressen (PPI, 409) der empfangenen Sektoren zu übersetzen; und
- die dritten Speicheradressen (TDR, 604, 605, 606) zum wiedergewinnen (423) der angeforderten Daten aus dem Speicher (405) bereitzustellen.

3. Vorrichtung nach Anspruch 2, bei der der Adressenumsetzer eine Menge von jeweils einem der Decoder (DA, DB, DC) zugeordneten Adressenumsetzeinheiten (601, 602, 603) umfasst, wobei jede Adressenumsetzeinheit (601-603) ausgestattet und beschaffen ist, jeweils die erste Speicheradresse (PPI) der für den zugeordneten Decoder (DA, DB, DC) bestimmten empfangenen Sektoren und die zweite Speicheradresse (611-613) der durch den zugeordneten Decoder (DA, DB, DC) angeforderten Daten zu empfangen, und ausgestattet ist, die zweite Speicheradresse (611-613) in die dritte Speicheradresse (TDR, 604-606) für die durch den zugeordneten Decoder (DA, DB, DC) angeforderten Daten zu übersetzen.

4. Vorrichtung nach Anspruch 3, bei der die Adressenumsetzeinheit (601-603) eine Menge von Adressenumsetzstufen (702-704) umfasst, die jeweils einen Eingang (708) und einen Ausgang (704) aufweisen, wobei die Eingänge und die Ausgänge der Adressenumsetzstufen (702-704) jeweils parallelgeschaltet sind und wobei die Adressenumsetzstufe (702-704) lokale Speichermittel (801-803) für einen Adressenbereich und für einen Adressen-Offset, einen Adressenkomparator (804), der prüft, ob eine an dem Eingang (611, 809) vorhandene Eingangsadresse innerhalb des Adressenbereichs (807, 808) liegt, einen Addierer (805) zum Addieren des Adressen-Offsets (803) zu der Eingangsadresse (611), und ein Gatter (810), das, falls die Prüfung wahr ist (806), eine Ausgabe des Addierers (805) an den Ausgang (604) der Adressenumsetzstufe (700-704) übergibt, umfasst.

5. Verfahren für das Verwalten von Speicherzugriffen in einer Vorrichtung zum Empfangen und Decodieren von in einer Folge von Sektoren (404) organisierten Daten, die jeweils für einen einer vorgegebenen Menge von Decodern (DA, DB, DC) wie durch eine Zielinformation (DI) des Sektors beschrieben bestimmte Daten (205) enthalten, wobei das Verfahren durch die folgenden Schritte gekennzeichnet ist:
- die Daten eines empfangenen Sektors in einem Speichermittel (405) wiedergewinnbar unter einer ersten Speicheradresse (PPI) speichern (410, 505);
- die erste Speicheradresse (PPI) und die Zielinformation (DI) des empfangenen Sektors an Adressenumsetzmittel (411, 506) bereitstellen,
- Wenn einer der Decoder (DA, DB, DC) anfordert, auf Daten in dem Speichermittel (405) bei einer auf eine vorgegebene Teilmenge des Adressraums (101, 201) des Speichermittels (405) beschränkten zweiten Speicheradresse (416-418) zuzugreifen, die zweite Speicheradresse (416-418) an die Adressenumsetzmittel (411, 506) weiterleiten,
- in den Adressenumsetzmitteln (411, 506) die zweite Speicheradresse (416-418) in eine dritte, nicht auf die vorgegebene Teilmenge beschränkte Speicheradresse (TDR, 604-606) übersetzen, und
- die angeforderten Daten aus dem Speichermittel (405) unter Verwendung der dritten Speicheradresse (TDR, 604-606) wiedergewinnen und an den Decoder (DA, DB, DC) übertragen.

6. Verfahren nach Anspruch 5, bei dem das Adressenumsetzmittel eine Menge von jeweils einem der Decoder (DA, DB, DC) zugeordneten Adressenumsetzeinheiten (601-603) umfasst; wobei in dem Schritt des Bereitstellens die erste Speicheradresse (PPI) für die dem Decoder (DA, DB, DC) des empfangenen Sektors zugeordnete Adressenumsetzeinheit (601-603) bereitgestellt wird; wobei in dem Schritt des Weiterleitens die zweite Speicheradresse (416-418, 611-613) an die dem die Daten anfordernden Decoder (DA, DB, DC) zugeordnete Adressenumsetzeinheit (601-603) weitergeleitet wird; und wobei der Schritt des Umsetzens in der dem die Daten anfordernden Decoder (DA, DB, DC) zugeordneten Adressenumsetzeinheit (601-603) ausgeführt wird.

7. Verfahren nach Anspruch 5 oder 6, bei dem der Schritt des Umsetzens die folgenden Teilschritte umfasst:
- Vergleichen (804) der zweiten Speicheradresse (611, 809) mit einer Menge von jeweils einem Adressen-Offset (803) zugeordneten Adressenbereichen (801, 802, 807, 808),
- Berechnen (805) der dritten Speicheradresse (811) aus der zweiten Speicheradresse (611) unter Verwendung jenes Adressen-Offsets (803), der dem Adressenbereich (801, 802, 807, 808) zugeordnet ist, in dem die zweite Speicheradresse (611, 809) liegt.

8. Verfahren nach Anspruch 7, bei dem dann, wenn der eine der Decoder (DA, DB, DC) Daten von einer linearen, mit einer Startspeicheradresse beginnenden und mit einer Endspeicheradresse endenden Folge zweiter Speicheradressen (416-418, 611-613) anfordert, der Schritt des Umsetzens die folgenden Teilschritte umfasst:
- Vergleichen (804) der Startspeicheradresse mit der Menge von Adressenbereichen;
- Berechnen (805) einer umgesetzten Startspeicheradresse (811) aus der Startspeicheradresse unter Verwendung jenes Adressen-Offsets (803), der dem Adressenbereich (801, 802, 807, 808) zugeordnet ist, in dem die Startspeicheradresse liegt;
- Falls die Endspeicheradresse ebenfalls in dem Adressenbereich liegt, Berechnen einer umgesetzten Endspeicheradresse aus der Endspeicheradresse unter Verwendung des Adressen-Offsets und Wiedergewinnen der angeforderten Daten von dem Speichermittel unter Verwendung der umgesetzten Startspeicheradresse und der umgesetzten Endspeicheradresse;
- Falls die Endspeicheradresse außerhalb des Adressenbereichs liegt, Wiedergewinnen eines Teils der angeforderten Daten von dem Speichermittel unter Verwendung der umgesetzten Startspeicheradresse und des Adressenbereichs, und Wiederholen der Teilschritte mit einer geänderten Startspeicheradresse.

## Revendications

1. Un appareil permettant la réception et le décodage d'un flux de données multiplexé (404), l'appareil étant connecté à un dispositif mémoire (405) adressable dans un espace d'adresse (101, 201) et disposant de deux décodeurs ou plus (DA, DB, DC), où le flux de données (404) est organisé en secteurs (S1-S6, Sn) contenant des parties données utiles (205) destinées individuellement à l'un des décodeurs (DA, DB, DC), où l'appareil est équipé pour écrire (410, 505) chaque secteur du flux de données dans un dispositif mémoire (405) au maximum une fois,
**caractérisé en ce que** au moins l'un des décodeurs (DA, DB, DC) est équipé pour exiger que les données soient écrites au ou lues dans le dispositif mémoire (405) aux adresses de décodeurs (416, 417, 418, 611, 612, 613) dans un sous-ensemble prédéterminé de l'espace d'adresse (101, 201), et **en ce que**
l'appareil dispose d'un traducteur d'adresses (411, 506, 601, 602, 603) qui traduit les adresses de décodeurs (416, 417, 418, 611, 612, 613) dans des adresses traduites (TDR, 604, 605, 606) qui ne sont pas confinées au sous-ensemble prédéterminé et utilise les adresses traduites (TDR, 604, 605, 606) pour accéder (423) au dispositif mémoire (405).

2. Appareil selon la revendication 1, où la destination des parties données utiles est décrite par une information de destination (DI), l'appareil étant en outre **caractérisé en ce que** le traducteur d'adresse (411, 506, 601, 602, 603) est équipé et configuré :
- pour recevoir, pour de multiples secteurs reçus, l'information de destination particulière (ID) et les premières adresses mémoires (PPI, 409) sous lesquelles ils ont été enregistrés dans le dispositif mémoire (405);
- pour recevoir les deuxièmes adresses mémoire (416-418, 611-613) de données que les décodeurs sélectionnés parmi les décodeurs (DA, DB, DC) exigent;
- pour traduire les deuxièmes adresses mémoire (416-418, 611-613) en troisièmes adresses mémoire (TDR, 604, 605, 606) en utilisant les informations de destination (ID) et les premières adresses mémoire (PPI, 409) des secteurs reçus; et
- pour fournir les troisièmes adresses mémoire (TDR, 604, 605, 606) afin de récupérer (423) les données requises de la mémoire (405).

3. Appareil selon la revendication 2, où le traducteur d'adresses comprend un ensemble d'unités de traduction d'adresses (601, 602, 603), chacune étant associée à l'un des décodeurs (DA, DB, DC), où chaque unité de traduction d'adresses (601-603) est équipée et configurée pour recevoir (608-610) la première adresse mémoire (PPI) des secteurs reçus qui sont destinés au décodeur associé (DA, DB, DC), et pour recevoir une seconde adresse mémoire (611-613) des données requises par le décodeur associé (DA, DB, DC), et est équipée pour traduire la deuxième adresse mémoire (611-613) en la troisième adresse mémoire (TDR, 604-606) pour les données qui sont requises par le décodeur associé (DA, DB,DC).

4. Appareil selon la revendication 3, où l'unité de traduction d'adresses (601-603) comprend un ensemble d'étages de traduction d'adresses (702-704) chacun disposant d'une entrée (708) et d'une sortie (604), où les entrées et sorties des étages de traduction d'adresses (702-704) sont connectées chacun en parallèle, et où l'étage de traduction d'adresses (702-704) comprend un dispositif de mémoire local (801-803) pour une plage d'adresses et pour un décalage d'adresses, un comparateur d'adresses (804) qui vérifie si une adresse d'entrée présente à l'entrée (611, 809) est ou non comprise dans la plage d'adresses (807, 808), un additionneur (805) pour ajouter le décalage d'adresse (803) à l'adresse d'entrée (611), et une porte (810) qui transmet une sortie de l'additionneur (805) à la sortie (604) de l'étage de traduction d'adresses (702-704) si la vérification est vraie (806).

5. Un procédé de gestion des accès mémoire dans un appareil pour recevoir et décoder des données organisées en une séquence de secteurs (404) contenant chacun des données (205) destinées à un ensemble prédéfini de décodeurs (DA, DB, DC) comme décrits par une information de destination (ID) du secteur, le procédé étant **caractérisé par** les étapes :
- d'enregistrement (410, 505) des données d'un secteur reçu dans un dispositif mémoire (405) récupérable sous une première adresse mémoire (PPI),
- de fourniture de la première adresse mémoire (PPI) et de l'information de destination (ID) du secteur reçu au dispositif de traduction d'adresses (411, 506),
- de transmission, lorsque l'un des décodeurs (DA, DB, DC) exige des données dans le dispositif mémoire (405) à une deuxième adresse mémoire (416-418) confiné à un sous-ensemble prédéterminé de l'espace d'adresse (101, 201) du dispositif mémoire, de la deuxième adresse mémoire (416-418) au dispositif de traduction d'adresses (411, 506),
- de traduction, dans le dispositif de traduction d'adresses (411, 506), de la deuxième adresse mémoire (416-418) en une troisième adresse mémoire (TDR, 604-606) non confinée à un sous-ensemble prédéterminé,
- de récupération des données requises du dispositif mémoire (405) en utilisant la troisième adresse mémoire (TDR, 604-606) et en transférant les données au décodeur (DA, DB, DC).

6. Le procédé selon la revendication 5, où le dispositif de traduction d'adresses comprend un jeu d'unités de traduction d'adresses (601-603) chacune étant associée à l'un des décodeurs (DA, DB, DC); où, dans le cours de la transmission, la première adresse mémoire (PPI) est transmise à l'unité de traduction d'adresses (601-603) associée au décodeur (DA, DB, DC) du secteur reçu; où, dans le cours de la transmission, la deuxième adresse mémoire (416-418, 611-613) est transmise à l'unité de traduction d'adresses (601-603) associée au décodeur (DA, DB, DC) qui a exigé les données; et où l'étape de traduction est réalisée dans l'unité de traduction d'adresses (601-603) associée au décodeur (DA, DB, DC) qui a exigé les données.

7. Le procédé selon une des revendications 5 ou 6, dans lequel l'étape de traduction comprend les sous-ensembles de
- comparaison (804) de la deuxième adresse mémoire (611, 809) à un ensemble de plages d'adresses (801, 802, 807, 808), chacune étant associée à un décalage d'adresse (803),
- calcul (805) de la troisième adresse mémoire (811) à partir de la deuxième adresse mémoire (611) en utilisant le décalage d'adresse (803) associé à la plage d'adresses (801, 802, 807, 808) dans laquelle se trouve la deuxième adresse mémoire (611, 809).

8. Le procédé selon la revendication 7, où, lorsque l'un des décodeurs (DA, DB, DC) exige des données d'une séquence linéaire de deuxièmes adresses mémoire (416-418, 611-613) débutant par une adresse mémoire de départ et finissant par une adresse mémoire de fin, l'étape de traduction comprend les sous-étapes de
- comparaison (804) de l'adresse mémoire de départ à l'ensemble des plages d'adresses;
- calcul (805) d'une adresse mémoire de départ traduite (811) à partir de l'adresse mémoire de départ en utilisant le décalage d'adresses (803) associé à la plage d'adresses (801, 802, 807, 808) dans laquelle se trouve l'adresse mémoire de départ;
- calcul, si l'adresse mémoire de fin se trouve également dans la plage d'adresses, d'une adresse mémoire de fin traduite à partir de l'adresse mémoire de fin en utilisant le décalage d'adresse, et récupération des données requises à partir du dispositif mémoire en utilisant l'adresse mémoire de départ traduite et l'adresse mémoire de fin traduite;
- récupération, si l'adresse mémoire de fin se trouve hors de la plage d'adresses, d'une partie des données requises dans le dispositif mémoire en utilisant l'adresse mémoire de départ traduite et la plage d'adresses et en répétant les sous-étapes avec une adresse mémoire de départ modifiée.
